# EUROPÄISCHE PATENTSCHRIFT

(11) **EP 2 872 546 B1**
(45) Veröffentlichungstag und Bekanntmachung des Hinweises auf die Patenterteilung: **22.06.2016**
(21) Anmeldenummer: 13732965.2
(22) Anmeldetag: 02.07.2013
(51) Int. Cl.: C08G 77/20, C08L 83/04

(54) **VERNETZBARE SILOXANE DURCH SÄUREKATALYSIERTE POLYMERISATION VON OXASILACYCLEN**
CROSSLINKABLE SILOXANES BY ACID-CATALYZED POLYMERIZATION OF OXASILACYCLENES
SILOXANES RÉTICULABLES PAR POLYMÉRISATION À CATALYSE ACIDE D'OXASILACYCLES

(30) Priorität: 11.07.2012 DE 102012013710
(43) Veröffentlichungstag der Anmeldung: 20.05.2015
(73) Patentinhaber: Wacker Chemie AG, 81737 München (DE)
(72) Erfinder: HALBACH, Tobias, 81543 München (DE); STOHRER, Jürgen, 82049 Pullach (DE); RIEGER, Bernhard, 89275 Elchingen (DE); ANGER, Christian, 81671 München (DE)
(74) Vertreter: Fritz, Helmut
(86) Internationale Anmeldenummer: PCT/EP2013/063926
(87) Internationale Veröffentlichungsnummer: WO 2014/009205

(56) Entgegenhaltungen:
- WO-A1-2011/051108
- R. SHCHEPIN, C. XU, P. DUSSAULT: "B(C6H5)3-Promoted Tandem Silylation and Intramolecular Hydrosilylation: Diastereoselective Synthesis of Oxasilinanes and Oxasilepanes", ORGANIC LETTERS, Bd. 12, Nr. 21, 10. April 2010 (2010-04-10), Seiten 4772-4775, XP002713191,

## Beschreibung

Die Erfindung betrifft vernetzbare Siloxane durch säurekatalysierte Polymerisation und Copolymerisation von Oxasilacyclen.

In DE102008000353A1 werden vernetzbare Polymerabmischungen, die mindestens eine Alkoxysilylgruppe ≡Si-O-C(R¹)(R²)(R³) enthalten, und deren Verwendung zur wasserfreien Silanvernetzung beschrieben.

Cyclische Siloxane wie Hexamethylcyclotrisiloxan oder Octamethylcyclotetrasiloxan können durch Katalyse mit Lewisoder Brönstedtsäuren zu linearen, langkettigen Siloxanen polymerisiert werden, wie z. B. in W. Noll, Chemie und Technologie der Silicone, Verlag Chemie GmbH, Weinheim, 1968 dargestellt wird.

Die Umsetzung von cyclischen Silylethern sog. Oxacyclen mit α,ω-SiOH terminierten Polydimethylsiloxanen führt zu Carbinolfunktionellen Siloxanen wie z.B. in DE10109842, EP629648, DE102004029259 oder DE102009046254 beschrieben wird. In JP2000186103A werden Siloxane mit einer -R-C(CH₃)=CH₂ Seitengruppe beschrieben, die als Monomer in einer Suspensionspolymerisation zur Herstellung von Tonerpartikeln eingesetzt werden.

Polysiloxane, die an einigen bzw. an jeder Siloxaneinheit zwei Alkylreste mit einer endständigen Doppelbindung tragen, sind bis dato unbekannt.

Gegenstand der Erfindung ist ein Verfahren zur Polymerisation von Oxasilacyclen, die ausgewählt werden aus den allgemeinen Formeln (1) und (5), 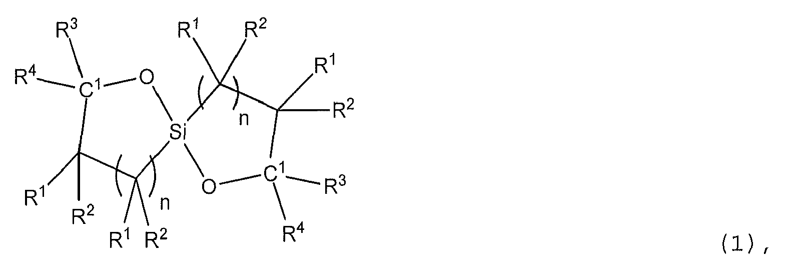 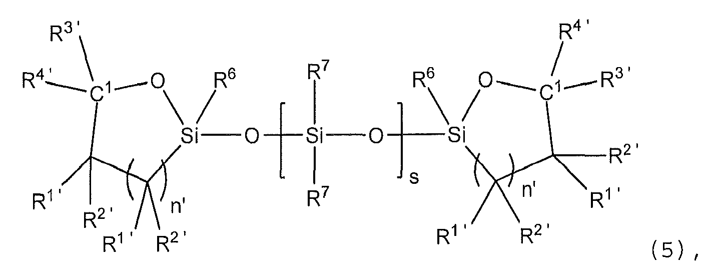 bei dem die Oxasilacyclen, die ausgewählt werden aus den allgemeinen Formeln (1) und (5) und gegebenenfalls Siloxane, die ausgewählt werden aus linearen Siloxanen der allgemeinen Formel (3) oder cyclischen Siloxanen der allgemeinen Formel (3a)

RO-Si(R⁷)₂O[Si(R₇)₂O]ₒSi(R⁷)₂-OR (3),

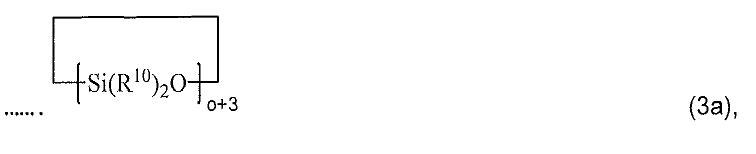

in Gegenwart von Säurekatalysator K polymerisiert werden, wobei Verbindungen der allgemeinen Formel (4)
nicht benachbarte Kohlenstoffatome durch Heteroatome, die ausgewählt werden aus N, 0, P, S, ersetzt sein können,
- **R⁷, R¹⁰,**: unsubstituierten oder substituierten Kohlenwasserstoffrest mit jeweils 1 bis 10 Kohlenstoffatomen,
- **R⁸**: einen Rest **R⁶** oder **R⁹,**
- **R⁹**: einen Rest der allgemeinen Formel (6)

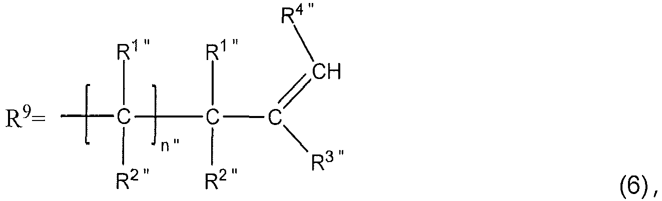

- **n, n', n"**: ganzzahlige Werte von mindestens 1,
- **x, y, y¹,**: die Werte 0 oder 1,
- **z**: ganzzahlige Werte von mindestens 1,
- **o**: ganzzahlige Werte von mindestens 0,
- **p**: ganzzahlige Werte von mindestens 1 und
- **s**: ganzzahlige Werte von mindestens 1 bedeuten.

Die Oxasilacyclen der allgemeinen Formeln (1) und (5) enthalten eine Si-O-C-Bindung, in der das C-Atom quartär substituiert ist.

Vorzugsweise werden in einem Folgeschritt die Verbindungen der allgemeinen Formel (4), insbesondere wenn **R** Wasserstoff oder Acylrest bedeutet, mit einer Endgruppen bildenden Verbindung der allgemeinen Formel **X-EG** zu Verbindungen der allgemeinen Formel (7) 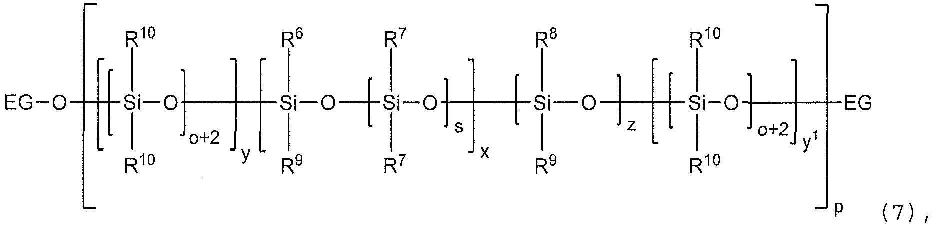 umgesetzt, wobei
**X** OH oder Halogen und
**EG** Kohlenwasserstoff oder Silylgruppe bedeuten und
**R^{1"}, R^{2"}, R^{3"}, R^{4"}, R⁶, R⁷, R¹⁰, R⁸, R⁹, n", x, y, y¹, z, o, p** und **s** die für die allgemeine Formel (4) angegebenen Bedeutungen aufweisen.

Durch das Verfahren können Siloxane der allgemeinen Formel (4) hergestellt werden entweder durch die säurekatalysierte Ringöffnung und Polymerisation von Oxasilacyclen der allgemeinen Formel (1) oder die Copolymerisation von Oxasilacyclen der allgemeinen Formeln (1) und (5) mit hydroxyterminierten Polydimethyl-siloxanen der allgemeinen Formel (3), oder die Copolymerisation von Oxasilacyclen der allgemeinen Formeln (1) und (5) und cyclischen Siloxanen oder die Polymerisation von Telechelen der allgemeinen Formeln (5), die durch Umsetzung von Siloxanen mit Oxasilacyclen hergestellt wurden. Die genannten Siloxane können endgestoppert werden zu Siloxanen der allgemeinen Formel (7).

Die Oxasilacyclen der allgemeinen Formel (5) können hergestellt werden durch Umsetzung der Verbindungen der allgemeinen Formel (2),

Werte von 1 bis 100, besonders bevorzugt von 2 bis 50, insbesondere von 5 bis 30 auf.

Werden cyclische Siloxane der allgemeinen Formel (3a) zur Copolymerisation eingesetzt, eignen sich alle cyclischen Siloxane, bevorzugt cyclische Siloxane mit o = 3-10, ganz besonderes bevorzugt cyclische Siloxane mit o = 3-5.

Werden lineare Siloxane der allgemeinen Formel (3) und/oder cyclische Siloxane der allgemeinen Formel (3a) zur Copolymerisation eingesetzt, so werden vorzugsweise 0,5 bis 3 mol, besonders bevorzugt 0,8 bis 2 mol, insbesondere 0,9 bis 1,2 mol Siloxane pro mol Oxasilacyclen, die ausgewählt werden aus den allgemeinen Formeln (1) und (5), eingesetzt.

Die unsubstituierten oder substituierten Kohlenwasserstoffoxyreste, Acyloxyreste oder Kohlenwasserstoffreste weisen jeweils vorzugsweise 1 bis 12 Kohlenstoffatome, insbesondere 1 bis 6 Kohlenstoffatome auf. Besonders bevorzugte Kohlenwasserstoffoxyreste sind Methoxy, Ethoxy und Propyloxy, besonders bevorzugter Acyloxyrest ist Acetoxy. Beispiele für Kohlenwasserstoffreste sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Die Substituenten an den Kohlenwasserstoffresten **R, R¹, R², R^{1'}, R^{2'}, R^{1"}, R^{2"}, R³, R⁴, R^{3'}, R^{4'}, R^{3"}, R^{4"}, R⁶, R⁷, R¹⁰** können beispielsweise Halogene, wie Fluor, Chlor oder Brom oder Cyanoreste sein.

Die Reste **R³, R^{3"}, R^{3'}, R⁴, R^{4'}** weisen vorzugsweise 1 bis 12, insbesondere 1 bis 6 Kohlenstoffatome auf. Ebenso bevorzugt sind hochmolekulare Reste, die bevorzugt (polymere) Wiederholungseinheiten aufweisen.
Der Rest **R^{4"}** ist vorzugsweise Wasserstoff oder ein Kohlenwasserstoffrest mit vorzugsweise 1 bis 12, insbesondere 1 bis 6 Kohlenstoffatomen.
Besonders bevorzugt stellen die Reste **R³, R^{3"} , R^{3'}, R⁴, R^{4'}** Methyl-, Ethyl-, Propyl-, Butyl-, Vinyl-, Phenyl- oder Carboxylreste -C(O)OCH₃ dar. Der Rest **R^{4"} ist** besonders bevorzugt Wasserstoff, Methyl-, Ethyl-, Propyl-, Butyl-, Vinyl-, Phenyl- oder Carboxylreste - C(O)OCH₃. Ganz besonders bevorzugt ist **R^{4"}** Wasserstoff.

Die Cyclen in den Oxasilacyclen der allgemeinen Formeln (1) und (2) sind mindestens ein 5-gliedriger Ring **(n, n' =** 1), bevorzugt ein 6- oder 7-gliedriger Ring **(n, n'=** 2, 3).
Die Oxasilacyclen der allgemeinen Formeln (1) und (2) weisen entweder ein (Formel (2)) oder zwei Cyclen (Formel (1)) auf. Oxasilacyclen der allgemeinen Formel (2) weisen bevorzugt mindestens eine OR⁵-Gruppe auf, bei denen **R⁵** bevorzugt eine Alkyl- oder Arylgruppe ist. Bei **R⁶** handelt es sich bevorzugt um eine Alkyl-, Acyl- oder Arylgruppe wie z.B. Methyl, Ethyl, Propyl, Phenyl, Acetoxy Methoxy, oder Ethoxy.

Die Kohlenwasserstoffreste **R⁷, R¹⁰** sind vorzugsweise unsubstituiert. Die Kohlenwasserstoffreste **R⁷, R¹⁰** weisen jeweils vorzugsweise insbesondere 1 bis 6 Kohlenstoffatome auf, insbesondere bevorzugt sind Methyl und Phenylreste.

Die Oxasilacyclen der allgemeinen Formel (1) können hergestellt werden durch Umsetzung von Verbindungen der allgemeinen Formel (8), 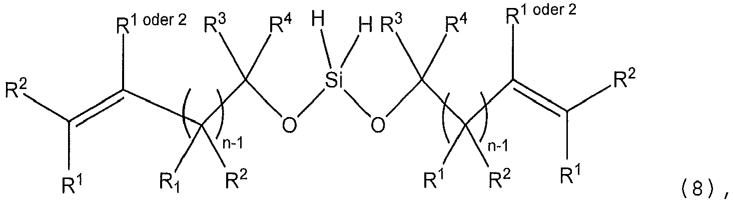 in Gegenwart von Hydrosilylierungskatalysatoren.
Die Oxasilacyclen der allgemeinen Formel (2) können hergestellt werden durch Umsetzung von Verbindungen der allgemeinen Formel (9), 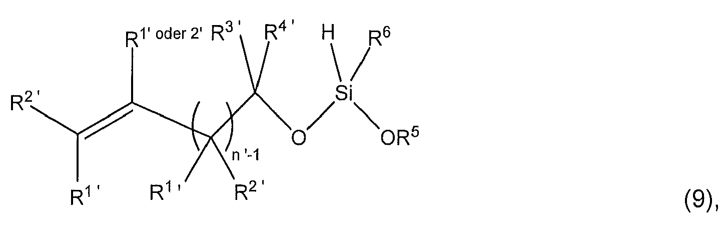 in Gegenwart von Hydrosilylierungskatalysatoren.

Die Herstellung von Oxasilacyclen der allgemeinen Formeln (1) oder (2) erfolgt durch intramolekulare Hydrosilylierung und kann mit dem Fachmann bekannten Hydrosilylierungskatalysatoren erfolgen. Bevorzugt werden Platinmetalle oder deren Verbindungen oder Triorganoborane BR₃ oder Aminoboran-Komplexe R₃NBH₃ oder Phosphinborane R₃PBH₃, wobei R einen unsubstituierten oder mit Halogenatomen substituierten Kohlenwasserstoffrest mit jeweils 1 bis 12 Kohlenstoffatomen bedeutet, als Katalysator verwendet.

Bevorzugte Katalysatoren **(K)** sind Lewis-Säuren und Brönstedt-Säuren. Beispiele für geeignete Lewis-Säuren sind Zinn, Zinnoxid sowie Zinnverbindungen, wie z.B. Dibutylzinndilaurat (DBTL), Titan, Titanoxid sowie Titanverbindungen, wie z.B. Titan(IV)isopropanolat, Ti(IV)acetylacetonat, Kupfer, Kupferoxid sowie Kupferverbindungen, wie z.B. Kupfer(I)trifluormethansulfonat, Eisen, Eisenoxid sowie Eisenverbindungen, wie z.B. Eisen(III)chlorid, Eisen(III)acetylacetonat, Mangan, Manganoxid sowie Manganverbindungen, wie z.B. Mangan(II)acetylacetonat, Aluminium, Aluminiumoxid sowie Aluminiumverbindungen, wie z.B. Aluminium(III)chlorid, Aluminium(III)isopropanolat, Trimethylaluminium, Bor, Boroxid sowie Borverbindungen, wie z.B. Bortrichlorid, Zirkonium, Zirkoniumoxid sowie Zirkoniumverbindungen, wie z.B. Zr(IV)acetylacetonat, Gallium, Galliumoxid sowie Galliumverindungen, z.B. Gallium(III)acetylacetonat, Cer, Ceroxid sowie Cerverbindungen, wie z.B. Cer(III)chlorid und Zink, Zinkoxid sowie Zinkverbindungen, wie z.B. Zinklaurinat bzw. Zinkpivalat. Beispiele für geeignete Brönstedt-Säuren sind Carbonsäuren, wie beispielsweise Laurinsäure, Sulfonsäuren, wie beispielsweise Trifluormethansulfonsäure, p-Toluosulfonsäure und Dodecylbenzolsulfonsäure, Mineralsäuren, wie beispielsweise Salzsäure, Salpetersäure und Phosphorsäure.
Bevorzugt sind auch Verbindungen, die bei Bestrahlung mit energiereicher Strahlung, wie beispielsweise UV-Licht oder Elektronenstrahlung, unter Zersetzung eine Brönstedt-Säure generieren. Beispielhaft seien für derartige Verbindungen wie o-, m-, p-Tolylreste; Xylylreste und Ethylphenylreste; und Aralkylreste, wie der Benzylrest, der α- und der β-Phenylethylrest.

Die Substituenten an den Kohlenwasserstoffresten **R, R¹, R², R^{1'}, R^{2'}, R^{1"}, R^{2"} , R³, R⁴, R³, R^{4'}, R^{3"}, R^{4"}, R⁶, R⁷, R¹⁰ können** beispielsweise Halogene, wie Fluor, Chlor oder Brom oder Cyanoreste sein.

Die Reste **R³, R^{3"}, R^{3'}, R⁴, R^{4'}** weisen vorzugsweise 1 bis 12, insbesondere 1 bis 6 Kohlenstoffatome auf. Ebenso bevorzugt sind hochmolekulare Reste, die bevorzugt (polymere) Wiederholungseinheiten aufweisen.
Der Rest **R^{4"}** ist vorzugsweise Wasserstoff oder ein Kohlenwasserstoffrest mit vorzugsweise 1 bis 12, insbesondere 1 bis 6 Kohlenstoffatomen.
Besonders bevorzugt stellen die Reste **R³, R^{3"}, R^{3'}, R⁴, R^{4'}** Methyl-, Ethyl-, Propyl-, Butyl-, Vinyl-, Phenyl- oder Carboxylreste -C(O)OCH₃ dar.
Der Rest **R^{4"} ist** besonders bevorzugt Wasserstoff, Methyl-, Ethyl-, Propyl-, Butyl-, Vinyl -, Phenyl- oder Carboxylreste - C(O)OCH₃. Ganz besonders bevorzugt ist **R^{4"}** Wasserstoff.

Die Cyclen in den Oxasilacylen der allgemeinen Formeln (1) und (2) sind mindestens ein 5-gliedriger Ring (**n, n' =** 1), bevorzugt ein 6- oder 7-gliedriger Ring (**n, n'=** 2, 3).
Die Oxasilacylen der allgemeinen Formeln (1) und (2) weisen entweder ein (Formel (2)) oder zwei Cyclen (Formel (1)) auf. Oxasilacylen der allgemeinen Formel (2) weisen bevorzugt mindestens eine OR⁵-Gruppe auf, bei denen **R⁵** bevorzugt eine Alkyl- oder Arylgruppe ist. Bei **R⁶** handelt es sich bevorzugt um eine Alkyl-, Acryl- oder Arylgruppe wie z.B. Methyl, Ethyl, Propyl, Phenyl, Acetoxy Methoxy, oder Ethoxy.

Die Kohlenwasserstoffreste **R⁷, R¹⁰** sind vorzugsweise unsubstituiert. Die Kohlenwasserstoffreste **R⁷, R¹⁰** weisen jeweils vorzugsweise insbesondere 1 bis 6 Kohlenstoffatome auf, insbesondere bevorzugt sind Methyl und Phenylreste.

Die Oxasilacylen der allgemeinen Formel (1) können hergestellt werden durch Umsetzung von Verbindungen der allgemeinen Formel (8), 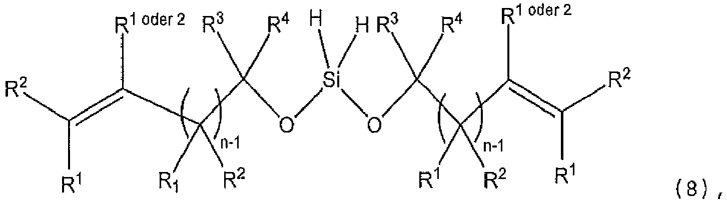 in Gegenwart von Hydrosilylierungskatalysatoren.
Die Oxasilacylen der allgemeinen Formel (2) können hergestellt werden durch Umsetzung von Verbindungen der allgemeinen Formel 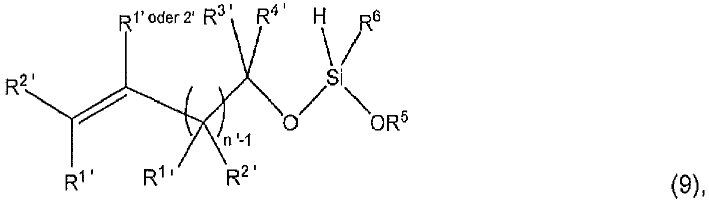 in Gegenwart von Hydrosilylierungskatalysatoren.

Die Herstellung von Oxasilacylen der allgemeinen Formeln (1) oder (2) erfolgt durch intramolekulare Hydrosilylierung und kann mit dem Fachmann bekannten Hydrosilylierungskatalysatoren erfolgen. Bevorzugt werden Platinmetalle oder deren Verbindungen oder Triorganoborane BR₃ oder Aminoboran-Komplexe R₃NBH₃ oder Phosphinborane R₃NBH₃, wobei **R** einen unsubstituierten oder mit Halogenatomen substituierten Kohlenwasserstoffrest mit jeweils 1 bis 12 Kohlenstoffatomen bedeutet, als Katalysator verwendet.

Bevorzugte Katalysatoren (K) sind Lewis-Säuren und Brönstedt-Säuren. Beispiele für geeignete Lewis-Säuren sind Zinn, Zinnoxid sowie Zinnverbindungen, wie z.B. Dibutylzinndilaurat (DBTL), Titan, Titanoxid sowie Titanverbindungen, wie z.B. Titan(IV)isopropanolat, Ti(IV)acetylacetonat, Kupfer, Kupferoxid sowie Kupferverbindungen, wie z.B. Kupfer(I)trifluormethansulfonat, Eisen, Eisenoxid sowie Eisenverbindungen, wie z.B. Eisen(III)chlorid, Eisen(III)acetylacetonat, Mangan, Manganoxid sowie Manganverbindungen, wie z.B. Mangan(II)acetylacetonat, Aluminium, Aluminiumoxid sowie Aluminiumverbindungen, wie z.B. Aluminium(III)chlorid, Aluminium(III)isopropanolat, Trimethylaluminium, Bor, Boroxid sowie Borverbindungen, wie z.B. Bortrichlorid, Zirkonium, Zirkoniumoxid sowie Zirkoniumverbindungen, wie z.B. Zr(IV)acetylacetonat, Gallium, Galliumoxid sowie Galliumverindungen, z.B. Gallium(III)acetylacetonat, Cer, Ceroxid sowie Cerverbindungen, wie z.B. Cer(III)chlorid und Zink, Zinkoxid sowie Zinkverbindungen, wie z.B. Zinklaurinat bzw. Zinkpivalat. Beispiele für geeignete Brönstedt-Säuren sind Carbonsäuren, wie beispielsweise Laurinsäure, Sulfonsäuren, wie beispielsweise Trifluormethansulfonsäure, p-Toluosulfonsäure und Dodecylbenzolsulfonsäure, Mineralsäuren, wie beispielsweise Salzsäure, Salpetersäure und Phosphorsäure.
Bevorzugt sind auch Verbindungen, die bei Bestrahlung mit energiereicher Strahlung, wie beispielsweise UV-Licht oder Elektronenstrahlung, unter Zersetzung eine Brönstedt-Säure generieren. Beispielhaft seien für derartige Verbindungen Diaryliodoniumverbindungen, wie beispielsweise {4-[(2-Hydroxytetradecyl)-oxy]-phenyl}phenyliodonium-hexafluoroantimonat, Diphenyliodoniumnitrat, Bis(4-tert.-butylphenyl)iodonium-p-toluolsulfonat, Bis(4-tert.-butylphenyl)iodonium-trifluormethansulfonat, Triarylsulfoniumverbindungen, wie beispielsweise 4-(Thiophenoxyphenyl)-diphenylsulfonium-hexafluoroantimonat, (4-Bromphenyl)diphenylsulfoniumtrifluormethansulfonat und N-Hydroxynaphthalimidetrifluormethansulfonat sowie 2-(4-Methoxystyryl)-4,6-bis(trichlormethyl)-1,3,5-triazin genannt.

Insbesondere kommen Katalysatoren **(K)** zum Einsatz, die eine Kondensation zwischen zwei Silanolgruppen, zwischen einer Silanolgruppe und einer Alkoxysilylgruppe, zwischen einer Silanolgruppe und einer Si-Cl-Gruppe bzw. zwischen einer Alkoxysilylgruppe oder Si-Cl-Gruppe und Wasser beschleunigen. Zudem können Mischungen verschiedener Katalysatoren **(K)** zum Einsatz kommen. Der Katalysator **(K)** wird bevorzugt in einer Konzentration von mindestens 10 ppm, besonders bevorzugt mindestens 0,1 Gew.-%, jeweils bezogen auf die Bolymerabmischung, d.h. die Reaktionsmischung, eingesetzt. Der Katalysator **(K)** wird bevorzugt in einer Konzentration von höchstens 20 Gew.-%, besonders bevorzugt höchstens 10 Gew.-%, insbesondere höchstens 2 Gew.-%, jeweils bezogen auf die Polymerabmischung eingesetzt.

Weiterer Gegenstand der Erfindung ist die Vernetzung der erhaltenen Siloxane, die ausgewählt werden aus den allgemeinen Formeln (4) und (7) durch radikalische, kationische, anionische oder Koordinationspolymerisation über deren endständige Doppelbindungen insbesondere in den Resten **R⁹.**

Als Vernetzungsreagenzien eignen sich alle, dem Fachmann bekannten, Reagenzien, Additive, Katalysatoren, insbesondere Katalysatoren **(K)** oder Initiatoren (I). Bevorzugt sind Lewis-Säuren oder Verbindungen, die unter thermischem Einfluss oder durch Bestrahlung mit UV-Licht freie Radikale bilden, oder sogenannte Photosäuregeneratoren, d.h. Verbindungen, die bei Bestrahlung mit energiereicher Strahlung, wie beispielsweise UV-Licht oder Elektronenstrahlung, unter Zersetzung eine Brönstedt-Säure generieren.

Die Vernetzung kann an den Siloxanen, die ausgewählt werden aus den allgemeinen Formeln (4) und (7), während der Polymerisation oder nach der Polymerisation stattfinden.

Die Ringöffnung und Polymerisation mit den Katalysatoren **(K)** kann auf verschiedene Weise erfolgen. Erwärmen der Silane oder Siloxane mit Katalysator **(K)** für 1 s bis 48 h auf 5 °C bis 300 °C. Bevorzugt ist eine Temperatur von 5 °C bis 190 °C.

Die Vernetzung mit Katalysatoren **(K)** und/oder Initiatoren **(I)** kann auf verschiedene Weise erfolgen. Erwärmen der Silane oder Siloxane mit Katalysator **(K)** für 1 s bis 48 h auf 5 °C bis 300 °C. Bevorzugt ist eine Temperatur von 5 °C bis 190 °C.

Vorzugsweise werden die Silane, die ausgewählt werden aus den allgemeinen Formeln (1) und (5) zur Ringöffnung auf eine Temperatur von mindestens 50 °C, insbesondere mindestens 80 °C gebracht. Vorzugsweise wird die Ringöffnung bei einer Temperatur von höchstens 180 °C, insbesondere höchstens 150 °C durchgeführt.

Als Energiequellen für die Ringöffnung und Polymerisation der Silane, die ausgewählt werden aus den allgemeinen Formeln (1) und (5) und die Vernetzung der Siloxane, die ausgewählt werden aus den allgemeinen Formeln (4) und (7) durch Erwärmen werden vorzugsweise Öfen, z.B. Umlufttrockenschränke, Heizkanäle, beheizte Walzen, beheizte Platten, Infrarot-Wärmestrahler oder Mikrowellen verwendet.

Bevorzugt kann die Ringöffnung, Polymerisation und Vernetzung auch durch Bestrahlen mit Ultraviolettlicht oder Elektronenstrahlung erfolgen.

Weitere Beispiele für Katalysatoren **(K),** insbesondere geeignet für die Vernetzung sind Lewis-Säuren, beispielsweise Aluminiumverbindungen, wie z.B. Aluminium(III)chlorid, Aluminium(III)isopropanolat, Trimethylaluminium, Borverbindungen, wie z.B. Bortrichlorid, Zirkoniumverbindungen, wie z.B. Zr(IV)acetylacetonat.

Beispiele für Initiatoren (I), die unter thermischem Einfluss oder durch Bestrahlung mit UV-Licht freie Radikale bilden, sind dem Fachmann bekannte thermische und photochemische Polymerisationsinitiatoren, wie sie beispielsweise im "Handbook of Free Radical initiators" von E. T. Denisov, T. G. Denisova und T. S. Pokidova, Wiley-Verlag, 2003, beschrieben sind. Beispiele für thermische Initiatoren sind tert.-Butylperoxid, tert.-Butyl-peroxopivalat, tert.-Butyl-peroxo-2-ethylhexanoat, Dibenzoylperoxid, Dilauroylperoxid, Azobisisobutyronitril, tert.-Butyl-peroxobenzoat, oder Cumylhydroperoxid. Beispiele für Photoinitiatoren sind Benzophenon, 2-Hydroxy-2-methyl-1-phenyl-1-propanon, 1-Hydroxy-cyclohexylphenylketon oder Methylbenzoylformiat.
Als Beispiele für Photosäuregeneratoren sind Diaryliodoniumverbindungen, wie beispielsweise {4-[(2-Hydroxytetradecyl)-oxy]-phenyl}phenyliodonium-hexafluoroantimonat, Diphenyliodoniumnitrat,
Diphenyliodoniumtriflat Bis(4-tert.-butylphenyl)iodonium-p-toluolsulfonat, Bis(4-tert.-butylphenyl)iodonium-trifluormethansulfonat, Triarylsulfoniumverbindungen, wie beispielsweise 4-(Thiophenoxyphenyl)-diphenylsulfonium-hexafluoroantimonat, (4-Bromphenyl)diphenylsulfoniumtrifluormethansulfonat und N-Hydroxynaphthalimidetrifluormethansulfonat sowie 2-(4-Methoxystyryl)-4, 6-bis(trichlormethyl)-1,3,5-triazin genannt.

Gegenstand der Erfindung sind auch die Verbindungen der allgemeinen Formeln (4), (5) und (7) sowie der Vernetzungsprodukte der Verbindungen der allgemeinen Formeln (4) und (7) .

Die Verbindungen der allgemeinen Formeln (4) und (7) können für alle Zwecke eingesetzt werden, für die vernetzte Siloxane, insbesondere elastomere Siloxane, Siliconharze und vernetzte organische Polymere typischerweise eingesetzt werden. Insbesondere können die Verbindungen der allgemeinen Formeln (4) und (7) zur Beschichtung von textilen Flächengebilden, als Polymerbeschichtung auf Papier, Kunststofffolien, Verpackungsmaterialien, mineralischen Oberflächen und Metallen eingesetzt werden.
Die Verbindungen der allgemeinen Formeln (4) und (7) eignen sich ebenfalls als Abformmassen oder zur Herstellung von Formkörpern.
Ebenso können die Verbindungen der allgemeinen Formeln (4) und (7) als Kleb-, Dicht- und Fugendichtstoffe oder Verkittungsmassen eingesetzt werden.

Alle vorstehenden Symbole der vorstehenden Formeln weisen ihre Bedeutungen jeweils unabhängig voneinander auf.

Soweit nicht anders angegeben sind alle Mengen- und Prozentangaben auf das Gewicht bezogen, alle Drücke 0,10 MPa (abs.) und alle Temperaturen 20 °C.
Das gewichtsmittlere Molekulargewicht M_{w} und zahlenmittlere Molekulargewicht Mₙ wurde bestimmt mittels Gelpermeations-chromoatographie (GPC) relativ zu einem Polystyrol-Standard, in THF, bei 35°C, Flussrate=1,0 ml/min und Detektion mit RI (Brechungsindex-Detektor) auf einem Säulenset PLgel-MIXED-C von Polymer Laboratories mit einem Injektionsvolumen von 100 µl. Die Polydispersität PDI ist der Quotient M_{w}/Mₙ aus gewichtsmittlerem Molekulargewicht M_{w} und zahlenmittlerem Molekulargewicht Mₙ. Die Bestimmung von Mₙ und M_{w} erfolgt mittels Gelpermeations-chromoatographie (GPC) gegen Polystyrol-Standard, in THF, bei 35°C, Flussrate=1,0 ml/min und Detektion mit RI (Brechungsindex-Detektor) auf einem Säulenset PLgel-MIXED-C von Polymer Laboratories mit einem Injektionsvolumen von 100 µl.

### Beispiel 1: Polymerisation und Vernetzung von 2,2,8,8-Tetramethyl-1,7-dioxa-6-silaspiro[5.5]undecan.

In einem Zweihals-Schlenkrohr aus Quarzglas werden 75,3 mg (0,18 mmol, 2 mol%) Diphenyliodoniumtriflat in 15 mL trockenem Aceton vorgelegt. Nach 1 min werden 2,00 g (8,75 mmol, 1 Äq) 2,2,8,8-Tetramethyl-1,7-dioxa-6-silaspiro[5.5]undecan zugegeben und nach weiteren 5 min mit der Bestrahlung bei 200 - 300 nm für 2 Stunden begonnen. Nach der Entfernung des Lösemittels wird ein klarer dünner Film erhalten der in allen gängigen Lösemitteln unlöslich ist.

### Beispiel 2: Polymerisation von 2,2,8,8-Tetramethyl-1,7-dioxa-6-silaspiro[5.5]undecan.

In einem Zweihals-Schlenkrohr aus Quarzglas werden 75,3 mg (0,18 mmol, 2 mol%) Diphenyliodoniumtriflat in 15 mL trockenem Aceton vorgelegt. Nach 1 min werden 2,00 g (8,75 mmol, 1 Äq) 2,2,8,8-Tetramethyl-1,7-dioxa-6-silaspiro[5.5]undecan zugegeben und nach weiteren 5 min bei 200 - 300 nm für 15 min bestrahlt begonnen. Nach der Entfernung des Lösemittels erhält man ein lösliches Siloxan mit einer Molmasse von M_{w}= 150000 g/mol und einem PDI=1,61.

### Beispiel 3: Copolymerisation von 2,2,8,8-Tetramethyl-1,7-dioxa-6-silaspiro[5.5]undecan mit α,ω-Si-OH-terminiertem Siloxan.

In einem Quarzschlenkkolben werden zu 4 g (1,77 mmol) α,ω-Si-OH-terminiertem Siloxan der mittleren Länge von 30 Monomereinheiten 20 mg (0,088 mmol; 5 mol%) 2,2,8,8-Tetramethyl-1,7-dioxa-6-silaspiro[5.5]undecan zugegeben. Anschießend werden 10 mg (0,023 mmol) Diphenyliodonium Triflat in 3 ml Aceton zugegeben und 2 Stunden bei 200-300 nm bestrahlt. Unmittelbar nach der Bestrahlung wird das Lösemittel entfernt, das Polysiloxan in THF aufgenommen und die Molmasse mittels GPC bestimmt: M_{w} = 130000 g/mol, PDI = 2,17.

### Beispiel 4: Copolymerisation von 2,2,8,8-Tetramethyl-1,7-dioxa-6-silaspiro[5.5]undecan mit α,ω-Si-OH-terminiertem Siloxan.

In einem Quarzschlenkkolben werden zu 4 g (1,77 mmol) α,ω-Si-OH-terminiertem Siloxan der mittleren Länge von 30 Monomereinheiten 20 mg (0,088 mmol; 5 mol%) 2,2,8,8-Tetramethyl-1,7-dioxa-6-silaspiro[5.5]undecan zugegeben, Anschießend werden 9 mg (0,023 mmol) Triphenylsulfonium Triflat in 3 ml Aceton zugegeben und 2 Stunden bei 200-300 nm bestrahlt. Unmittelbar nach der Bestrahlung wird das Lösemittel entfernt, das Polysiloxan in THF aufgenommen und die Molmasse mittels GPC bestimmt: M_{w} = 220000 g/mol, PDI = 3,5.

### Beispiel 5: Umsetzung von α,ω-Si-OH-terminiertem Siloxan mit 2-Isopropoxy-2,6,6-trimethyl-1,2-oxasilinan zu einem endfunktionalisierten Siloxan.

In einem Schlenkrohr werden 210 mg 2-Isopropoxy-2,6,6-trimethyl-1,2-oxasilinan (1,04 mmol, 4 Äq) und 294 mg α,ω-Si-OH-terminiertem Siloxan der mittleren Länge von 10 Monomereinheiten (0,26 mmol, 1 Äq) zu 7,5 ml Benzol gegeben. Die entstehende Lösung so lange gerührt, bis im 1H - NMR-Spektrum die Isopropoxygruppe nicht mehr gefunden werden kann. Anschließend wird das Lösemittel im Vakuum entfernt.
Man erhält ein klares, transparentes Öl.
¹H-NMR (500 MHz, C₆D₆, 300 K): δ [ppm] = 1.84-1.78 (m, 2H), 1.73-1.68 (m, 2H), 1,36-3.34 (s, 6H), 1.26-1.25 (s, 6H), 0.79-0.68 (m, 4H), 0.59-0.44 (m, 4H), 0.34-0.18 (m, 96H).
¹³C-DEPT135-NMR (126 MHz, C₆D₆, 300 K): δ [ppm] = 128.06, 40.93, 31.73, 29.55, 17.85, 12.97, 1.15, 0.86, 0.22.
²⁹Si-NMR (99 MHz C₆D₆, 300 K): δ [ppm] = -19.30, -19.49, -19.57, -21.40, -21.78, -21.84, -21.95.

### Beispiel 6: Polymerisation eines endfunktionalisierten Siloxans.

In einem Quarzschlenkkolben werden zu 1 g des endfunktionalisierten Siloxans aus Beispiel 5 2 mg (0,005 mmol) Triphenylsulfonium-Triflat in 3 ml Aceton zugegeben und 2 Stunden bei 200-300 nm bestrahlt. Unmittelbar nach der Bestrahlung wird das Lösemittel entfernt. Man erhält ein hochviskoses Öl, das in gängigen organischen Lösemitteln wie z.B. THF löslich ist.

### Beispiel 7: Vernetzung mit Lewis-Säuren.

6,05 g (2,94 mmol) Polysiloxan aus Beispiel 3 werden in 70 ml Dichlormethan aufgenommen und mit 15,6 mg (0,11 mmol; 4 mol%) AlCl₃ versetzt und 4 Stunden bei Raumtemperatur gerührt.

Anschließend wird das Lösemittel im Vakuum entfernt. Es wird ein gelblicher Feststoff gebildet. Das Produkt ist in gängigen organischen Lösemitteln unlöslich.

### Beispiel 8: Vernetzung mit Peroxid.

6,05 g (2,94 mmol) Polysiloxan aus Beispiel 3 werden in 70 ml Dichlormethan aufgenommen und mit 28,4 mg (0,11 mmol, 4 mol%) Dibenzoylperoxid versetzt, dreimal entgast und 6 Stunden bei 200 - 300nm bestrahlt. Anschließend wird das Lösemittel im Vakuum entfernt.
Es wird eine hochviskose Masse erhalten, die sich in gängigen organischen Lösemitteln nicht mehr lösen lässt.

### Beispiel 9: Vernetzung mit Triphenylsulfonium-Triflat.

6,05 g (2,94 mmol) Polysiloxan aus Beispiel 3 werden in 70 ml Dichlormethan aufgenommen und mit 45,3 mg (0,11 mmol; 4 mol%) Triphenylsulfonium Triflat versetzt und 4 Stunden bei Raumtemperatur mit UV-Licht bestrahlt. Anschließend wird das Lösemittel im Vakuum entfernt.
Es wird ein gelblicher Feststoff gebildet. Das Produkt ist in gängigen organischen Lösemitteln unlöslich.

### Beispiel 10: Vernetzung des Homopolymers mit AlCl₃.

3 g (13,13 mmol) Polysiloxan aus Beispiel 2 werden in 30 ml Dichlormethan gelöst und 70 mg (0,5 mmol, 4 mol%) AlCl₃ zugegeben und für zwei Stunden bei Raumtemperatur gerührt. Nach einer halben Stunde kann eine Bildung von Flocken beobachtet werden. Das Lösemittel wird aus der Reaktionslösung entfernt. Das erhaltene Polymer ist in gängigen organischen Lösemitteln nicht mehr löslich.

## Patentansprüche

1. Verfahren zur Polymerisation von Oxasilacyclen, die ausgewählt werden aus den allgemeinen Formeln (1) und (5), 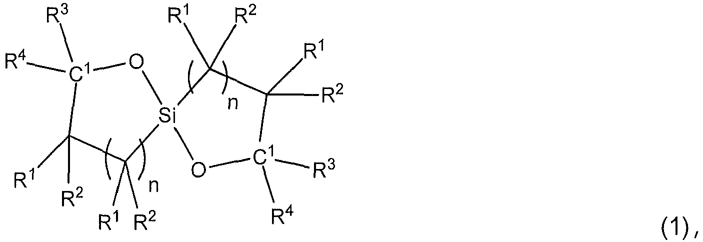 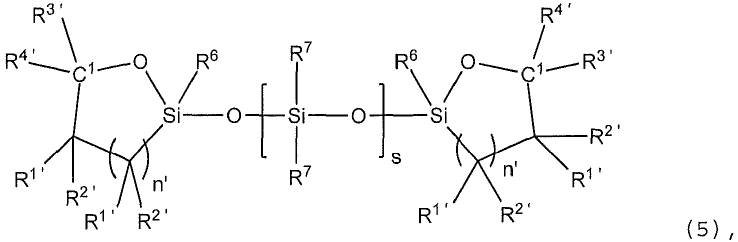 bei dem die Oxasilacyclen, die ausgewählt werden aus den allgemeinen Formeln (1) und (5) und gegebenenfalls Siloxane, die ausgewählt werden aus linearen Siloxanen der allgemeinen Formel (3) oder cyclischen Siloxanen der allgemeinen Formel (3a)
R-,Si(R⁷)₂O[Si(R⁷)₂O]ₒSi(R⁷)₂-R (3), 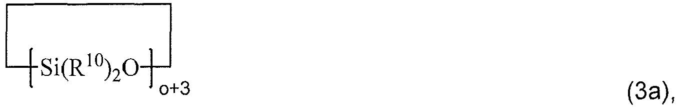
in Gegenwart von Säurekatalysator K polymerisiert werden, wobei Verbindungen der allgemeinen Formel (4) 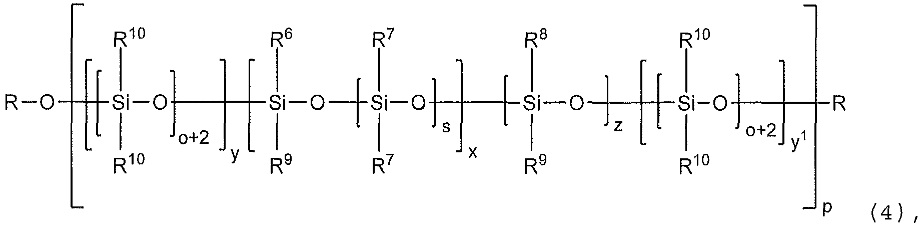 entstehen, wobei
**R** Wasserstoff, unsubstituierten oder substituierten Kohlenwasserstoffrest oder Acylrest, mit jeweils 1 bis 50 Kohlenstoffatomen,
**R¹, R², R¹, R², R^{1"}, R^{2"}** Wasserstoff, Halogen, Cyano, OH oder unsubstituierten oder substituierten Kohlenwasserstoffoxyrest, Acyloxyrest, Alkoxyrest oder Kohlenwasserstoffrest mit jeweils 1 bis 50 Kohlenstoffatomen, bei denen jeweils nicht benachbarte Kohlenstoffatome durch Heteroatome, die ausgewählt werden aus N, O, P, S, ersetzt sein können, wobei zwei oder drei der Reste **R¹, R², R¹, R^{2'} R^{1"}, R^{2"}** miteinander verbunden sein können,
**R³, R⁴, R^{3'}, R^{4'}, R^{3"},** unsubstituierten oder substituierten Kohlenwasserstoffrest mit jeweils 1 bis 50 Kohlenstoffatomen, bei denen jeweils nicht benachbarte Kohlenstoffatome durch Heteroatome, die ausgewählt werden aus N, O, P, S, ersetzt sein können, oder hochmolekularen Rest,
**R^{4"}** Wasserstoff, unsubstituierten oder substituierten Kohlenwasserstoffrest mit jeweils 1 bis 49 Kohlenstoffatomen, bei denen jeweils nicht benachbarte Kohlenstoffatome durch Heteroatome, die ausgewählt werden aus N, O, P, S, ersetzt sein können, oder hochmolekularen Rest,
**R⁶** unsubstituierten oder substituierten Kohlenwasserstoffrest mit jeweils 1 bis 50 Kohlenstoffatomen, bei denen jeweils nicht benachbarte Kohlenstoffatome durch Heteroatome, die ausgewählt werden aus N, O, P, S, ersetzt sein können,
**R⁷, R¹⁰,** unsubstituierten oder substituierten Kohlenwasserstoffrest mit jeweils 1 bis 10 Kohlenstoffatomen,
**R⁸** einen Rest R⁶ oder R⁹,
**R⁹** einen Rest der allgemeinen Formel (6) 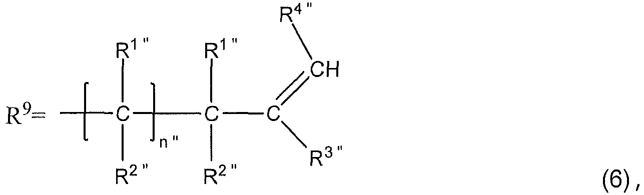
**n, n', n"** ganzzahlige Werte von mindestens 1,
**x, y, y¹,** die Werte 0 oder 1,
**z** ganzzahlige Werte von mindestens 1,
**o** ganzzahlige Werte von mindestens 0,
**p** ganzzahlige Werte von mindestens 1 und
**s** ganzzahlige Werte von mindestens 1 bedeuten.

2. Verfahren nach Anspruch 1, bei dem die Verbindungen der allgemeinen Formel (4) in einem Folgeschritt mit einer Endgruppen bildenden Verbindung der allgemeinen Formel X-EG zu Verbindungen der allgemeinen Formel (7) 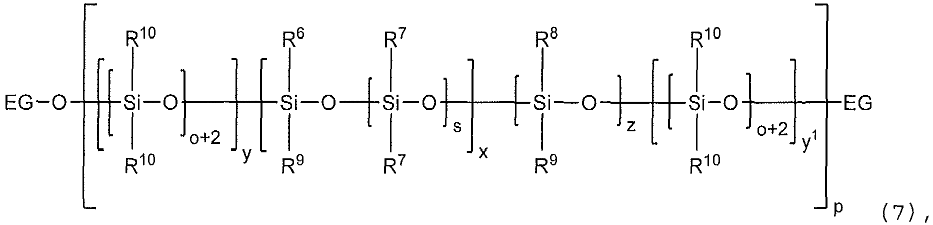 umgesetzt werden, wobei
**X** OH oder Halogen und
**EG** Kohlenwasserstoff oder Silylgruppe bedeuten und **R^{1"}, R^{2"}, R^{3"}, R^{4"}, R⁶, R⁷, R¹⁰, R⁸, R⁹, n", x, y, y¹, z, o, p** und s die für die allgemeine Formel (4) gemäss Anspruch 1 angegebenen Bedeutungen aufweisen.

3. Verfahren zur Herstellung der Oxasilacyclen der allgemeinen Formel (5) 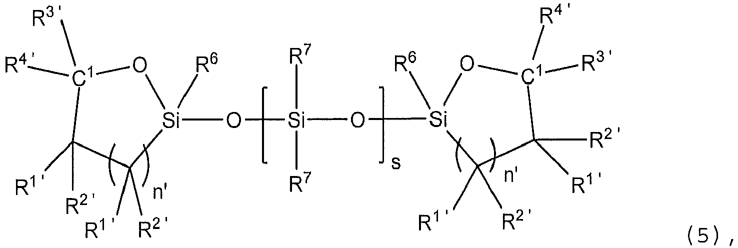 bei dem Verbindungen der allgemeinen Formel (2), 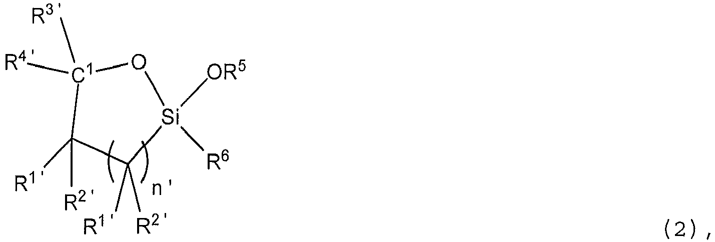 mit Siloxanen der allgemeinen Formel (3),
RO-Si(R⁷)₂O[Si(R⁷)₂O]ₒSi(R⁷)₂-OR (3),
umgesetzt werden, wobei
**R** Hydroxy, unsubstituierten oder substituierten Kohlenwasserstoffoxyrest oder Acyloxyrest, mit jeweils 1 bis 50 Kohlenstoffatomen,
**R^{1'}, R^{2'}** Wasserstoff, Halogen, Cyano, OH oder unsubstituierten oder substituierten Kohlenwasserstoffoxyrest, Acyloxyrest, Alkoxyrest oder Kohlenwasserstoffrest mit jeweils 1 bis 50 Kohlenstoffatomen, bei denen jeweils nicht benachbarte Kohlenstoffatome durch Heteroatome, die ausgewählt werden aus N, O, P, S, ersetzt sein können, wobei zwei oder drei der Reste **R¹, R², R^{1'}, R^{2'} R^{1"}, R^{2"}** miteinander verbunden sein können,
**R^{3'} R^{4'}** unsubstituierten oder substituierten Kohlenwasserstoffrest mit jeweils 1 bis 50 Kohlenstoffatomen, bei denen jeweils nicht benachbarte Kohlenstoffatome durch Heteroatome, die ausgewählt werden aus N, O, P, S, ersetzt sein können, oder hochmolekularen Rest,
**R⁵** einen unsubstituierten oder substituierten Kohlenwasserstoffrest mit jeweils 1 bis 10 Kohlenstoffatomen bedeutet,
**R⁶** unsubstituierten oder substituierten Kohlenwasserstoffrest mit jeweils 1 bis 50 Kohlenstoffatomen, bei denen jeweils nicht benachbarte Kohlenstoffatome durch Heteroatome, die ausgewählt werden aus N, O, P, S, ersetzt sein können,
**R⁷** unsubstituierten oder substituierten Kohlenwasserstoffrest mit jeweils 1 bis 10 Kohlenstoffatomen,
**n'** ganzzahlige Werte von mindestens 1,
**o** ganzzahlige Werte von mindestens 0 und
**s** ganzzahlige Werte von mindestens 1 bedeuten.

4. Verfahren nach einem der vorangehenden Ansprüche, bei dem die Kohlenwasserstoffoxyreste oder Acyloxyreste jeweils 1 bis 6 Kohlenstoffatome aufweisen.

5. Verfahren nach einem der vorangehenden Ansprüche, bei dem die ,Kohlenwasserstoffreste **R³, R^{3"}, R³, R^{4'}** jeweils 1 bis 12 Kohlenstoffatome und **R^{4"}** Wasserstoff oder 1 bis 12 Kohlenstoffatome aufweisen.

6. Verfahren nach einem der vorangehenden Ansprüche, bei dem **n** und **n'** jeweils die Werte 2 oder 3 bedeuten.

7. Verfahren nach einem der vorangehenden Ansprüche, bei dem **R⁵** eine Alkylgruppe ist.

8. Verfahren nach einem der vorangehenden Ansprüche, bei dem **R⁶** eine Alkylgruppe ist.

9. Verfahren nach einem der vorangehenden Ansprüche, bei dem **R⁷** und **R¹⁰** jeweils 1 bis 6 Kohlenstoffatome aufweisen.

10. Verfahren nach einem der vorangehenden Ansprüche, bei dem die Katalysatoren **(K)** ausgewählt werden aus Lewis-Säuren und Brönstedt-Säuren.

11. Verfahren zur Vernetzung der Siloxane, die ausgewählt werden aus den allgemeinen Formeln (4) und (7) durch radikalische, kationische, anionische oder Koordinationspolymerisation über deren endständige Doppelbindungen.

12. Verbindungen der allgemeinen Formeln (4), (5) und (7) gemäß Anspruch 1 und 2 sowie die Vernetzungsprodukte der Verbindungen der allgemeinen Formeln (4) und (7) gemäß Anspruch 11.

## Claims

1. Process for the polymerization of oxasilacycles which are selected from among the general formulae (1) and (5) 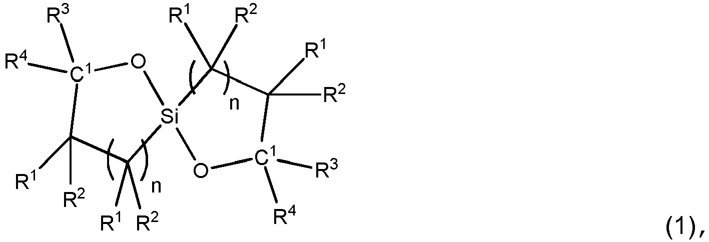 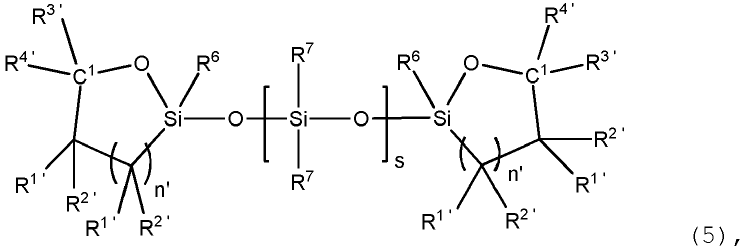 wherein the oxasilacycles which are selected from among the general formulae (1) and (5) and optionally siloxanes which are selected from among linear siloxanes of the general formula (3) or cyclic siloxanes of the general formula (3a)
R-Si(R⁷)₂O[Si(R⁷)₂O]ₒSi(R⁷)₂-R (3), 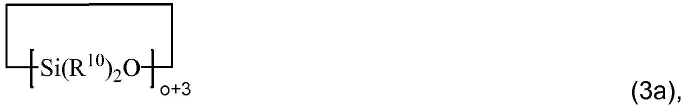
are polymerized in the presence of acid catalyst K to form compounds of the general formula (4) 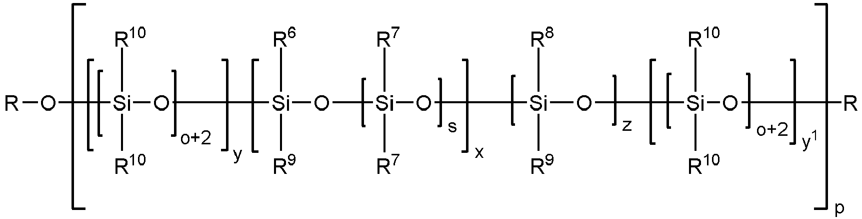 (4),
where
**R** is hydrogen, an unsubstituted or substituted hydrocarbon radical or acyl radical, in each case having from 1 to 50 carbon atoms,
**R¹, R², R¹, R^{2'}, R^{1"}, R^{2"}** are each hydrogen, halogen, cyano, OH or an unsubstituted or substituted hydrocarbonoxy radical, acyloxy radical, alkoxy radical or hydrocarbon radical in each case having from 1 to 50 carbon atoms, in which in each case nonadjacent carbon atoms can be replaced by heteroatoms selected from among N, 0, P, S, where two or three of the radicals **R¹, R², R^{1'}, R^{2'}, R^{1"}, R^{2"}** can be joined to one another,
**R³, R⁴, R^{3'} R^{4'}, R^{3"}** are each an unsubstituted or substituted hydrocarbon radical in each case having from 1 to 50 carbon atoms, in which in each case nonadjacent carbon atoms can be replaced by heteroatoms selected from among N, 0, P, S, or a high molecular weight radical,
**R^{4"}** is hydrogen, an unsubstituted or substituted hydrocarbon radical in each case having from 1 to 49 carbon atoms, in which in each case nonadjacent carbon atoms can be replaced by heteroatoms selected from among N, 0, P, S, or a high molecular weight radical,
**R⁶** is an unsubstituted or substituted hydrocarbon radical in each case having from 1 to 50 carbon atoms, in which in each case nonadjacent carbon atoms can be replaced by heteroatoms selected from among N, 0, P, S,
**R⁷, R¹⁰** are each an unsubstituted or substituted hydrocarbon radical in each case having from 1 to 10 carbon atoms,
**R⁸** is a radical **R⁶** or **R⁹,**
**R⁹** is a radical of the general formula (6) 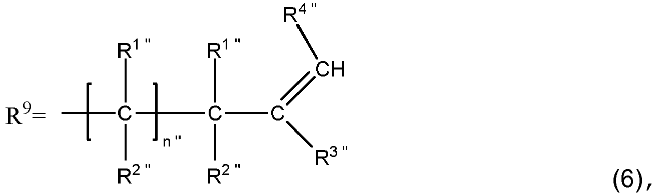
**n, n', n"** are integers of at least 1,
**x, y, y**¹ are each 0 or 1,
**z** is an integer of at least 1,
**o** is an integer of at least 0,
**p** is an integer of at least 1 and
**s** is an integer of at least 1.

2. Process according to Claim 1, wherein the compounds of the general formula (4) are reacted in a subsequent step with an end-group-forming compound of the general formula **X-EG** to give compounds of the general formula (7) 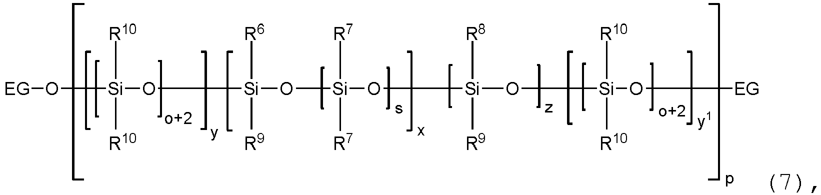 where
**X** is OH or halogen and
**EG** is a hydrocarbon or silyl group and **R^{1"}, R^{2"}, R^{3"}**, **R^{4"}**, **R⁶**, **R⁷**, **R¹⁰**, **R⁸**, **R⁹**, **n" x, y, y¹, z, o,** p and **s** have the meanings given in claim 1 for the general formula (4).

3. Process for preparing oxasilacycles of the general formula (5) 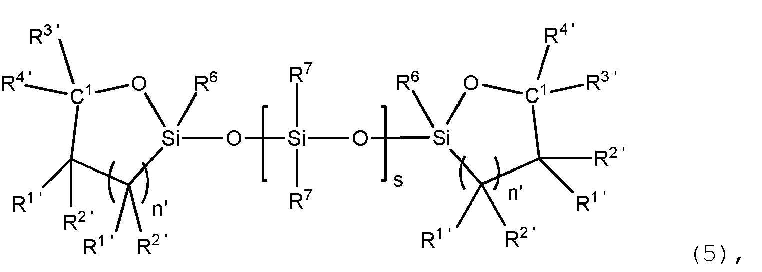 wherein compounds of the general formula (2), 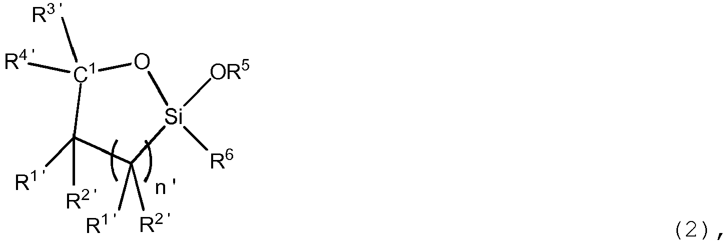 are reacted with siloxanes of the general formula (3),
RO-Si(R⁷)₂O[Si(R⁷)₂O]ₒSi(R⁷)₂-OR (3),
where
**R** is hydroxy, an unsubstituted or substituted hydrocarbonoxy radical or acyloxy radical in each case having from 1 to 50 carbon atoms,
**R¹, R^{2'}** are each hydrogen, halogen, cyano, OH or an unsubstituted or substituted hydrocarbonoxy radical, acyloxy radical, alkoxy radical or hydrocarbon radical in each case having from 1 to 50 carbon atoms, in which in each case nonadjacent carbon atoms can be replaced by heteroatoms selected from among N, 0, P, S, where two or three of the radicals **R¹, R², R^{1'} R^{2'}, R^{1"}, R^{2"}** can be joined to one another,
**R^{3'}, R^{4'}** are each an unsubstituted or substituted hydrocarbon radical in each case having from 1 to 50 carbon atoms, in which in each case nonadjacent carbon atoms can be replaced by heteroatoms selected from among N, 0, P, S, or a high molecular weight radical,
**R⁵** is an unsubstituted or substituted hydrocarbon radical in each case having from 1 to 10 carbon atoms,
**R⁶** is an unsubstituted or substituted hydrocarbon radical in each case having from 1 to 50 carbon atoms, in which in each case nonadjacent carbon atoms can be replaced by heteroatoms selected from among N, 0, P, S,
**R⁷** is an unsubstituted or substituted hydrocarbon radical in each case having from 1 to 10 carbon atoms,
**n'** is an integer of at least 1,
**o** is an integer of at least 0 and
**s** is an integer of at least 1.

4. Process according to any of the preceding claims, wherein the hydrocarbonoxy radicals or acyloxy radicals in each case have from 1 to 6 carbon atoms.

5. Process according to any of the preceding claims, wherein the hydrocarbon radicals **R³, R**^{**3**"}, **R^{3'}**, **R^{4'}** in each case have from 1 to 12 carbon atoms and **R^{4"}** is hydrogen or has from 1 to 12 carbon atoms.

6. Process according to any of the preceding claims, wherein **n** and **n'** are each 2 or 3.

7. Process according to any of the preceding claims, wherein **R⁵** is an alkyl group.

8. Process according to any of the preceding claims, wherein **R⁶** is an alkyl group.

9. Process according to any of the preceding claims, wherein **R⁷** and **R¹⁰** in each case have from 1 to 6 carbon atoms.

10. Process according to any of the preceding claims, wherein the catalysts **(K)** are selected from among Lewis acids and Brönsted acids.

11. Process for crosslinking siloxanes selected from among the general formulae (4) and (7) by free-radical, cationic, anionic or coordination polymerization via their terminal double bonds.

12. Compounds of the general formulae (4), (5) and (7) according to either of Claims 1 and 2 and also the crosslinking products of the compounds of the general formulae (4) and (7) according to Claim 11.

## Revendications

1. Procédé pour la polymérisation d'oxasilacycles, qui sont choisis parmi les formules générales (1) et (5), 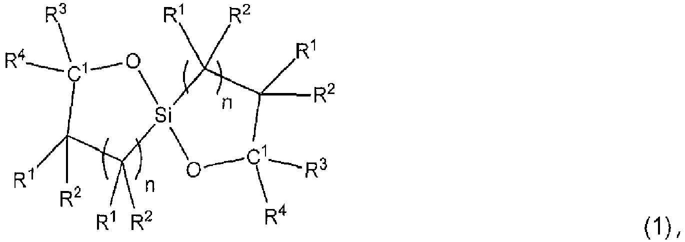 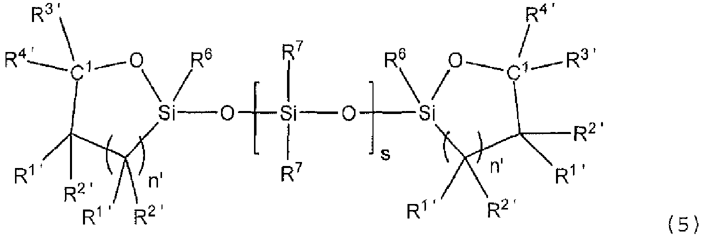 dans lequel les oxasilacycles, qui sont choisis parmi les formules générales (1) et (5) et le cas échéant des siloxanes, qui sont choisis parmi les siloxanes linéaires de formule générale (3) ou les siloxanes cycliques de formule générale (3a)
R-Si(R⁷)₂O[Si(R⁷)₂O]ₒSi(R⁷)₂-R (3), 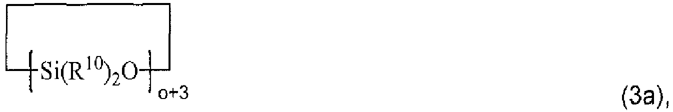
sont polymérisés en présence d'un catalyseur acide K, des composés de formule générale (4) étant formés 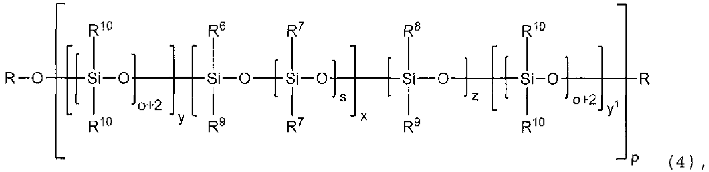 dans lesquelles
R signifie hydrogène, un radical hydrocarboné ou acyle non substitué ou substitué, comprenant à chaque fois 1 à 50 atomes de carbone,
R¹, R², R^{1'}, R^{2'}, R^{1"}, R^{2"} signifient hydrogène, halogène, cyano, OH ou un radical hydrocarbure-oxy, acyloxy, alcoxy ou hydrocarboné non substitué ou substitué, comprenant à chaque fois 1 à 50 atomes de carbone, dans lesquels des atomes de carbone non adjacents peuvent à chaque fois être remplacés par des hétéroatomes, qui sont choisis parmi N, 0, P, S, deux ou trois des radicaux R¹, R², R^{1'}, R^{2'}, R^{1"}, R^{2"} pouvant être reliés les uns aux autres,
R³, R⁴, R^{3'}, R^{4'}, R^{3"} signifient un radical hydrocarboné non substitué ou substitué comprenant à chaque fois 1 à 50 atomes de carbone, dans lesquels des atomes de carbone non adjacents peuvent à chaque fois être remplacés par des hétéroatomes, qui sont choisis parmi N, 0, P, S, ou un radical de haut poids moléculaire,
R^{4"} signifie hydrogène, un radical hydrocarboné non substitué ou substitué comprenant à chaque fois 1 à 49 atomes de carbone, dans lesquels des atomes de carbone non adjacents peuvent à chaque fois être remplacés par des hétéroatomes, qui sont choisis parmi N, 0, P, S, ou un radical de haut poids moléculaire,
R⁶ signifie un radical hydrocarboné non substitué ou substitué comprenant à chaque fois 1 à 50 atomes de carbone, dans lesquels des atomes de carbone non adjacents peuvent à chaque fois être remplacés par des hétéroatomes, qui sont choisis parmi N, 0, P, S,
R⁷, R¹⁰ signifient un radical hydrocarboné non substitué ou substitué, comprenant à chaque fois 1 à 10 atomes de carbone,
R⁸ signifie un radical R⁶ ou R⁹,
R⁹ signifie un radical de formule générale (6) 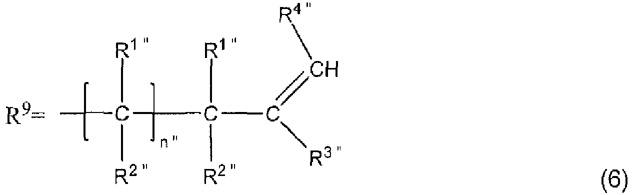
n, n', n" signifient des valeurs entières d'au moins 1,
x, y, y¹, signifient les valeurs 0 ou 1 et
z signifient des valeurs entières d'au moins 1,
o signifient des valeurs entières d'au moins 0,
p signifient des valeurs entières d'au moins 1 et
s signifient des valeurs entières d'au moins 1.

2. Procédé selon la revendication 1, dans lequel les composés de formule générale (4) sont transformés dans une étape consécutive avec un composé formant des groupes terminaux de formule générale X-EG en composés de formule générale (7) 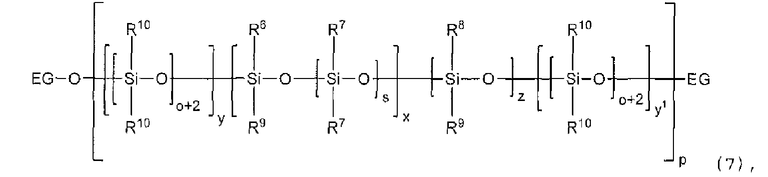 dans laquelle
X signifie OH ou halogène et
EG signifie hydrocarbure ou un groupe silyle et R^{1"}, R^{2"}, R^{3"}, R^{4"}, R⁶, R⁷, R¹⁰, R⁸, R⁹, n", x, y, y¹, z, o, p et s présentent les significations indiquées pour la formule générale (4) selon la revendication 1.

3. Procédé pour la préparation d'oxasilacycles de formule générale (5) 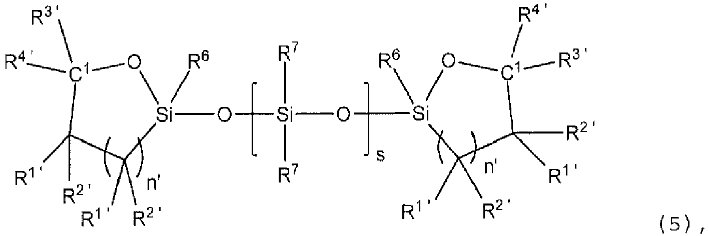 dans lequel des composés de formule générale (2) 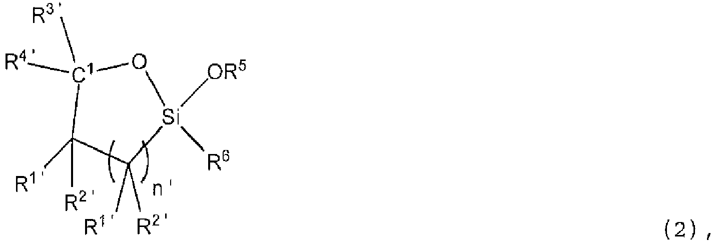 sont transformés avec des siloxanes de formule générale (3)
RO-Si(R⁷)₂O[Si(R⁷)₂O]ₒSi(R⁷)₂-OR (3),
dans laquelle
R signifie hydroxy, un radical hydrocarbure-oxy ou acyloxy non substitué ou substitué, comprenant à chaque fois 1 à 50 atomes de carbone,
R^{1'}, R^{2'} signifient hydrogène, halogène, cyano, OH ou un radical hydrocarbure-oxy, acyloxy, alcoxy ou hydrocarboné non substitué ou substitué, comprenant à chaque fois 1 à 50 atomes de carbone, dans lesquels des atomes de carbone non adjacents peuvent à chaque fois être remplacés par des hétéroatomes, qui sont choisis parmi N, 0, P, S, deux ou trois des radicaux R¹, R², R^{1'}, R^{2'}, R^{1"}, R^{2"} pouvant être reliés les uns aux autres,
R^{3'}, R^{4'} signifient un radical hydrocarboné non substitué ou substitué comprenant à chaque fois 1 à 50 atomes de carbone, dans lesquels des atomes de carbone non adjacents peuvent à chaque fois être remplacés par des hétéroatomes, qui sont choisis parmi N, 0, P, S, ou un radical de haut poids moléculaire,
R⁵ signifie un radical hydrocarboné non substitué ou substitué, comprenant à chaque fois 1 à 10 atomes de carbone,
R⁶ signifie un radical hydrocarboné non substitué ou substitué comprenant à chaque fois 1 à 50 atomes de carbone, dans lesquels des atomes de carbone non adjacents peuvent à chaque fois être remplacés par des hétéroatomes, qui sont choisis parmi N, 0, P, S,
R⁷ signifie un radical hydrocarboné non substitué ou substitué, comprenant à chaque fois 1 à 10 atomes de carbone,
n' signifie des valeurs entières d'au moins 1,
o signifie des valeurs entières d'au moins 0 et
s signifie des valeurs entières d'au moins 1.

4. Procédé selon l'une quelconque des revendications précédentes, dans lequel les radicaux hydrocarbure-oxy ou acyloxy présentent à chaque fois 1 à 6 atomes de carbone.

5. Procédé selon l'une quelconque des revendications précédentes, dans lequel les radicaux hydrocarbonés R³, R^{3"}, R^{3'}, R^{4'} présentent à chaque fois 1 à 12 atomes de carbone et R^{4"} représente hydrogène ou présente 1 à 12 atomes de carbone.

6. Procédé selon l'une quelconque des revendications précédentes, dans lequel n et n' signifient à chaque fois les valeurs 2 ou 3.

7. Procédé selon l'une quelconque des revendications précédentes, dans lequel R⁵ représente un groupe alkyle.

8. Procédé selon l'une quelconque des revendications précédentes, dans lequel R⁶ représente un groupe alkyle.

9. Procédé selon l'une quelconque des revendications précédentes, dans lequel R⁷ et R¹⁰ présentent à chaque fois 1 à 6 atomes de carbone.

10. Procédé selon l'une quelconque des revendications précédentes, dans lequel les catalyseurs (K) sont choisis parmi les acides de Lewis et les acides de Brönstedt.

11. Procédé pour la réticulation des siloxanes, qui sont choisis parmi les formules générales (4) et (7) par polymérisation radicalaire, cationique, anionique ou de coordination via leurs doubles liaisons en position terminale.

12. Composés des formules générales (4), (5) et (7) selon la revendication 1 et 2 ainsi que produits de réticulation des composés des formules générales (4) et (7) selon la revendication 11.
